# EUROPÄISCHE PATENTANMELDUNG

(11) **EP 3 929 024 A1**
(43) Veröffentlichungstag der Anmeldung: **29.12.2021**
(21) Anmeldenummer: 21173189.8
(22) Anmeldetag: 11.05.2021
(51) Int. Cl.: B60L 5/18, B60L 5/22

(54) **STROMABNEHMER UND MIT EINEM SOLCHEN AUSGESTATTETES FAHRZEUG**

(30) Priorität: 26.06.2020 DE 102020207959
(71) Anmelder: Siemens Mobility GmbH, 81739 München (DE)
(72) Erfinder: Sänger, Göran, 12587 Berlin (DE)

(57) **Zusammenfassung**

Die Erfindung betrifft einen Stromabnehmer (2) für ein elektrisch oder hybridelektrisch angetriebenes Straßenfahrzeug (1) zur elektrischen Energieeinspeisung aus einer zweipoligen Oberleitungsanlage (3). Der Stromabnehmer (2) umfasst wenigstens eine Schleifleiste (8) zur elektrischen Kontaktierung eines Fahrdrahts (4) der Oberleitungsanlage (3) sowie eine die wenigstens eine Schleifleiste (4) tragende Wippenanordnung (9). Er umfasst auch ein aufrichtbares Traggestell (11) mit einem fahrzeugseitigen Ende (12), mit dem es gelenkig am Straßenfahrzeug (1) abstützbar ist, und mit einem fahrdrahtseitigen Ende (14), mit dem die Wippenanordnung (9) gelenkig verbunden ist. Ferner umfasst der Stromabnehmer (2) eine Hubeinrichtung, die derart mit Traggestell (11) und Wippenanordnung (9) gekoppelt ist, dass die Wippenanordnung (9) vertikal anhebbar und die wenigstens eine Schleifleiste (8) mit einer Kontaktkraft an den Fahrdraht (4) andrückbar ist. Indem am fahrdrahtseitigen Ende (14) des Traggestells (11) ein Schwingungstilger (16) angeordnet ist, der zur Dämpfung von fahrzeugseitig eingetragenen, vertikalen Schwingungen des Traggestells (11) und der Wippenanordnung (9) ausgebildet ist, kann die Kontaktgüte eines Stromabnehmers (2) verbessert werden. Die Erfindung betrifft auch ein Straßenfahrzeug (1), welches mit einem solchen Stromabnehmer (2) ausgestattet ist.

## Beschreibung

Die Erfindung betrifft einen Stromabnehmer nach dem Oberbegriff des Patentanspruches 1 und ein Fahrzeug mit einem solchen Stromabnehmer.

Für Elektromobilitätslösungen im Straßenverkehr sind verschiedene Arten der elektrischen Energieversorgung von elektromotorisch angetriebenen Kraftfahrzeugen bekannt. Zur Versorgung eines gattungsgemäßen Fahrzeugs, insbesondere eines Lastkraftwagens, weist dieses einen Stromabnehmer auf, mit dem zur Energieeinspeisung ein elektrischer Kontakt mit einer entlang einer elektrifizierten Fahrbahn installierten Oberleitungsanlage herstellbar ist.

Eine Aufrechterhaltung des Kontakts zwischen Stromabnehmer und Fahrdrähten der Oberleitungsanlage auch während der Fahrt ist nicht nur aus einer funktionalen Sicht hinsichtlich der Energieübertragung sicherzustellen, sie ist auch aus sicherheitstechnischen Gründen wichtig. Um einen Kontaktverlust schnell, also im Bereich von wenigen Millisekunden, feststellen zu können, ist es erforderlich, die Kontaktkraft, mit der eine Schleifleiste des Stromabnehmers an einen Fahrdraht gedrückt wird, ständig zu messen und zu bewerten.

Aus der internationalen Veröffentlichung WO 2019/042849 A1 ist beispielsweise ein nicht schienengebundenes, elektromotorisch angetriebenes Fahrzeug mit einem Stromabnehmer zur Kontaktierung der Fahrdrähte einer sich in eine Fahrtrichtung erstreckenden zweipoligen Oberleitungsanlage bekannt. Der Stromabnehmer ist in und entgegen einer Vertikalrichtung verfahrbar und weist ein Trägerelement sowie eine mit einem Federelement an dem Trägerelement federnd gelagerte Schleifleiste zur Kontaktierung eines der Fahrdrähte auf. Bei einer Kontaktierung der Schleifleiste mit einem Fahrdraht wird die Schleifleiste entgegen der Vertikalrichtung aus einer Ruheposition relativ zum Trägerelement ausgelenkt. Die Auslenkung wird von einer Sensoreinheit des Stromabnehmers erfasst. In Abhängigkeit der Auslenkung erfolgt eine Auswertung, ob und unter welcher Kontaktkraft die Schleifleiste mit dem Fahrdraht in Kontakt steht.

Bei Stromabnehmern von Kraftfahrzeugen erfolgt ein signifikanter Schwingungseintrag seitens des Fahrgestells, auf das sich der Stromabnehmer zumindest indirekt abstützt. Die vom Fahrzeug eingetragenen Schwingungen wirken nun ebenfalls auf dieses Federelement und führen zu zusätzlichen unerwünschten Kontaktkraftschwankungen.

Der Erfindung liegt daher die Aufgabe zugrunde, bei einem gattungsgemäßen Stromabnehmer die Kontaktgüte zwischen Schleifleiste und Fahrdraht zu verbessern.

Die Aufgabe wird gelöst durch einen Stromabnehmer der eingangs genannten Art mit den im kennzeichnenden Teil des Patentanspruches 1 angegebenen Merkmalen.

Demnach ist der Stromabnehmer für ein elektrisch oder hybrid-elektrisch angetriebenes Straßenfahrzeug, insbesondere für einen Lastkraftwagen oder Bus, zur elektrischen Energieeinspeisung aus einer zweipoligen Oberleitungsanlage ausgebildet und vorgesehen. Er umfasst wenigstens eine Schleifleiste zur elektrischen Kontaktierung eines Fahrdrahts der Oberleitungsanlage. Er kann auch eine Schleifleiste oder vorzugsweise ein paralleles Schleifleistenpaar umfassen - und zwar für jeden Fahrdraht bei zwei Kontaktpolen. Der Stromabnehmer umfasst eine die wenigstens eine Schleifleiste tragende Wippenanordnung. Die Wippenanordnung ist um eine Wippenachse drehbar gelagert, die sich parallel zu der wenigstens einen Schleifleiste und im montierten Zustand auch parallel zu einer Fahrzeugquerachse erstreckt. Die Wippenanordnung ist gelenkig mit einem fahrdrahtseitigen Ende eines aufrichtbaren Traggestells des Stromabnehmers verbunden. Über ein fahrzeugseitiges Ende des Traggestells ist es gelenkig am Fahrzeug abstützbar. Das Traggestell kann pantographenartig ausgebildet sein und dabei einen sein fahrzeugseitiges Ende aufweisenden Unterarm sowie einen zweiteiligen, sein fahrdrahtseitige Ende aufweisenden Oberarm aufweisen. Ein Führungsgestänge bewirkt, dass die Wippenanordnung beim Aufrichten und Absenken des Traggestells derart geführt wird, dass eine die Schleifleistenpaare aufweisende Ebene parallel verschoben wird. Der Stromabnehmer umfasst ferner eine beispielsweise als Luftbalg ausgebildete Hubeinrichtung, die derart mit Traggestell und Wippenanordnung gekoppelt ist, dass die Wippenanordnung vertikal anhebbar und die wenigstens eine Schleifleiste mit einer einstellbaren Kontaktkraft an den Fahrdraht andrückbar ist.

Erfindungsgemäß ist am fahrdrahtseitigen Ende des Traggestells ein Schwingungstilger angeordnet, der zur Dämpfung von fahrzeugseitig eingetragenen, vertikalen Schwingungen des Traggestells und der Wippenanordnung ausgebildet ist. Hierdurch kann mittels einer einfachen mechanischen Maßnahme eine Ruhigstellung von Traggestell und Wippenanordnung erreicht werden, so dass die Kontaktkraft zwischen Schleifleisten und Fahrdrähten wenig oder gar nicht durch fahrzeugseitig eingetragenen Schwingungen beeinflusst wird. Dies verbessert also unmittelbar die Kontaktgüte des Stromabnehmers.

In einer vorteilhaften Ausführungsform des erfindungsgemäßen Stromabnehmers weist der Schwingungstilger eine gegen eine Rückstellkraft einer Federanordnung bewegliche Tilgermasse auf. Dabei sind das Gewicht der Tilgermasse und die Federkonstante der Federanordnung derart bemessen, dass vertikale Schwingungen dämpfbar sind, die durch eine Einfederbewegung des Fahrzeuggestells eingetragen werden. Unebenheiten im Fahrbahnbelag oder auch Bremsmanöver führen zum Einfedern des Fahrzeuggestells und damit zu einer Schwingungsanregung im Traggestell des Stromabnehmers zwischen fahrdrahtseitigem und fahrzeugseitigem Ende. Damit hierbei die Wippenanordnung möglichst ruhig gehalten werden kann, sind das Gewicht der Tilgermasse und die Federkonstante der Federanordnung speziell auf die Dämpfung dieser angeregten Schwingungen ausgelegt.

In einer weiteren vorteilhaften Ausführungsform des erfindungsgemäßen Stromabnehmers ist die wenigstens eine Schleifleiste über ein Federelement auf der Wippenanordnung gelagert. Zur Entkopplung von vertikalen Schwingungen zwischen den Fahrdrähten der Oberleitungsanlage und dem die Schleifleisten tragenden Traggestell des Stromabnehmers ist zwischen Schleifleiste und Traggestell eine Federelement geschaltet. Hierdurch können in hoher Frequenz variierende Fahrdrahthöhen ausgeglichen werden, um die Kontaktgüte zu erhalten oder zumindest Kontaktverluste zu vermeiden.

In einer weiteren vorteilhaften Ausführungsform des erfindungsgemäßen Stromabnehmers erlaubt das Federelement eine Auslenkbewegung der wenigstens einen Schleifleiste relativ zur Wippenanordnung, deren Größe von einer Kraftmesseinrichtung des Stromabnehmers als Maß für die Kontaktkraft zwischen der wenigstens einen Schleifleiste und dem Fahrdraht gemessen wird. Das Federelement kann als Blattfeder ausgebildet sein, die mit einem Winkelsensor zusammenwirkt, welcher den sich durch eine Auslenkung der Schleifleisten ergebenden Biegewinkel der Blattfeder misst, der wiederum als Maß für die wirkende Kontaktkraft dient. Durch die Dämpfung der fahrzeugseitig eingetragenen Schwingungen mittels des Schwingungstilgers wird die Messung und damit die Bewertung der Kontaktkraft erst mit hinreichender Genauigkeit möglich.

Die Erfindung betrifft auch ein elektrisch oder hybrid-elektrisch angetriebenes Straßenfahrzeug, insbesondere Lastkraftwagen oder Bus, mit einem gefederten Fahrgestell, auf das sich ein Stromabnehmer nach einem der Ansprüche 1 bis 4 abstützt.

Weitere Eigenschaften und Vorteile ergeben sich aus nachfolgender Beschreibung eines Ausführungsbeispiels des erfindungsgemäßen Stromabnehmers anhand der Zeichnungen, in deren
- FIG 1: ein erfindungsgemäßes Fahrzeug mit Stromabnehmer in Seitenansicht und
- FIG 2: ein erfindungsgemäßer Stromabnehmer in Seitenansicht
schematisch veranschaulicht sind.

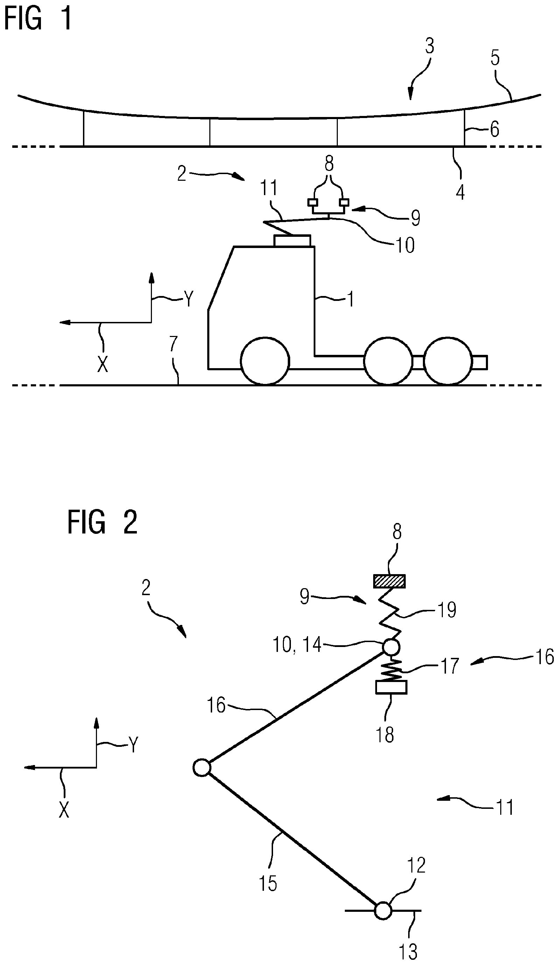

Gemäß FIG 1 ist ein als Zugmaschine für einen nicht dargestellten Sattelauflieger ausgebildetes Straßenfahrzeug 1 mit einem Stromabnehmer 2 ausgestattet. Das Straßenfahrzeug 1 ist elektrisch oder hybrid-elektrisch angetrieben, wobei der erfindungsgemäße Stromabnehmer 2 zur elektrischen Energieeinspeisung aus einer zweipoligen Oberleitungsanlage 3 ausgebildet und vorgesehen ist. Die Oberleitungsanlage 3 weist für die beiden Kontaktpole je ein aus Fahrdraht 4, Tragseil 5 und Hänger 6 gebildetes, abgespanntes Kettenwerk auf, welche parallel zueinander oberhalb einer elektrifizierten Fahrbahn 7, beispielsweise dem rechten Fahrstreifen einer mehrstreifigen Fernstraße, und in Fahrzeuglängsrichtung X verlaufend angeordnet sind.

Der Stromabnehmer 2 umfasst je Kontaktpol ein Paar parallel zueinander und quer zu einer Fahrzeuglängsachse X verlaufende Schleifleisten 8 zur elektrischen Kontaktierung des zugeordneten Fahrdrahts 4. Je Kontaktpol umfasst der Stromabnehmer 2 eine das jeweilige Paar an Schleifleisten 8 tragende Wippenanordnung 9, die jeweils um eine sich parallel zu den Schleifleisten 8 erstreckende Wippenachse 10 - in FIG 1 und 2 senkrecht zur Zeichnungsebene stehend - drehbar gelagert sind. Die Wippenanordnungen 9 sind über ein aufrichtbares Traggestell 11 mit dem Straßenfahrzeugs 1 verbunden.

Gemäß FIG 2 umfasst das Traggestell 11 ein fahrzeugseitiges Ende 12, mit dem es sich auf einem Fahrzeuggestell 13 des Straßenfahrzeugs 1 gelenkig abstützt, und ein fahrdrahtseitiges Ende 14, mit dem die Wippenanordnungen 9 gelenkig verbunden sind. Das Traggestell 11 ist pantographenartig ausgebildet und umfasst einen sein fahrzeugseitiges Ende 12 aufweisenden Unterarm 15 sowie einen zweiteiligen, sein fahrdrahtseitige Ende 14 aufweisenden Oberarm 16. Ein nicht näher dargestelltes Führungsgestänge bewirkt, dass die Wippenanordnungen 9 beim Aufrichten und Absenken des Traggestells 11 derart geführt werden, dass eine die Schleifleisten 8 aufweisende Ebene parallel in Fahrzeughochrichtung Y verschoben wird. Der Stromabnehmer umfasst ferner eine nicht dargestellte und beispielsweise als Luftbalg ausgebildete Hubeinrichtung, die derart mit Traggestell 11 und den Wippenanordnungen 9 gekoppelt ist, dass die Wippenanordnungen 9 vertikal, in Fahrzeughochrichtung Y anhebbar und die Schleifleisten 8 mit einer einstellbaren Kontaktkraft an die Fahrdrähte 4 andrückbar sind.

Gemäß FIG 2 ist am fahrdrahtseitigen Ende 14 des Traggestells 11 ein Schwingungstilger 16 angeordnet. Der Schwingungstilger 16 weist eine gegen eine Rückstellkraft einer Federanordnung 17 bewegliche Tilgermasse 18 auf. Das Gewicht der Tilgermasse 18 und die Federkonstante der Federanordnung 17 sind derart bemessen, dass vertikale Schwingungen dämpfbar sind, die durch eine Einfederbewegung des Fahrzeuggestells 13 in den Stromabnehmer 2 eingetragen werden. Solche Hubbewegungen des Fahrzeuggestells 13 können durch Unebenheiten im Belag der Fahrbahn 7 oder auch durch Bremsmanöver des Straßenfahrzeugs 1 herrühren. Der Schwingungstilger 16 dämpft diese Schwingungen und sorgt für eine Ruhigstellung von Traggestell 11 und Wippenanordnungen 9, so dass die Kontaktkraft zwischen Schleifleisten 9 und Fahrdrähten 4 durch die Schwingungen wenig oder gar nicht beeinflusst werden. Dies verbessert also unmittelbar die Kontaktgüte des erfindungsgemäßen Stromabnehmers 2.

Gemäß FIG 2 ist zwischen Schleifleisten 8 und Traggestell 11 eine beispielsweise als Blattfeder ausgebildetes Federelement 19 zur Entkopplung von vertikalen Schwingungen zwischen den Fahrdrähten 4 der Oberleitungsanlage 3 und dem Traggestell 11 des Stromabnehmers 2 geschaltet. Dies dient dem Ausgleich von in hoher Frequenz variierender Fahrdrahthöhen, um die Kontaktgüte zu verbessern, mindestens aber um Kontaktverluste zu vermeiden. Außerdem erlaubt das Federelement 19 eine Messung der Auslenkbewegung der Schleifleisten 8 relativ zur jeweiligen Wippenanordnung 9, deren Größe von einer Kraftmesseinrichtung des Stromabnehmers 2 als Maß für die Kontaktkraft genutzt wird. Die Messung der Kontaktkraft wird durch die Dämpfung der fahrzeugseitig eingetragenen Schwingungen mittels des Schwingungstilgers 16 mit hinreichender Genauigkeit messbar und damit im Sinne einer Risikobewertung erst bewertbar.

## Patentansprüche

1. Stromabnehmer (2) für ein elektrisch oder hybridelektrisch angetriebenes Straßenfahrzeug (1), insbesondere Lastkraftwagen oder Bus, zur elektrischen Energieeinspeisung aus einer zweipoligen Oberleitungsanlage (3), umfassend
- wenigstens eine Schleifleiste (8) zur elektrischen Kontaktierung eines Fahrdrahts (4) der Oberleitungsanlage (3),
- eine die wenigstens eine Schleifleiste (4) tragende Wippenanordnung (9),
- ein aufrichtbares Traggestell (11) mit einem fahrzeugseitigen Ende (12), mit dem es gelenkig am Straßenfahrzeug (1) abstützbar ist, und mit einem fahrdrahtseitigen Ende (14), mit dem die Wippenanordnung (9) gelenkig verbunden ist, und
- eine Hubeinrichtung, die derart mit Traggestell (11) und Wippenanordnung (9) gekoppelt ist, dass die Wippenanordnung (9) vertikal anhebbar und die wenigstens eine Schleifleiste (8) mit einer Kontaktkraft an den Fahrdraht (4) andrückbar ist,
**dadurch gekennzeichnet,**
- **dass** am fahrdrahtseitigen Ende (14) des Traggestells (11) ein Schwingungstilger (16) angeordnet ist, der zur Dämpfung von fahrzeugseitig eingetragenen, vertikalen Schwingungen des Traggestells (11) und der Wippenanordnung (9) ausgebildet ist.

2. Stromabnehmer (2) nach Anspruch 1,
- wobei der Schwingungstilger (16) eine gegen eine Rückstellkraft einer Federanordnung (17) bewegliche Tilgermasse (18) aufweist, und
- wobei ein Gewicht der Tilgermasse (18) und eine Federkonstante der Federanordnung (17) derart bemessen sind, dass vertikale Schwingungen dämpfbar sind, die durch eine Einfederbewegung des Fahrzeuggestells (13) eingetragen werden.

3. Stromabnehmer (2) nach Anspruch 1 oder 2,
- wobei die wenigstens eine Schleifleiste (8) über ein Federelement (19) auf der Wippenanordnung (9) gelagert ist.

4. Stromabnehmer (2) nach Anspruch 3,
- wobei das Federelement (19) eine Auslenkbewegung der wenigstens einen Schleifleiste (8) relativ zur Wippenanordnung (9) erlaubt, deren Größe von einer Kraftmesseinrichtung des Stromabnehmers (2) als Maß für die Kontaktkraft zwischen der wenigstens einen Schleifleiste (8) und dem Fahrdraht (4) gemessen wird.

5. Elektrisch oder hybridelektrisch angetriebenes Straßenfahrzeug (1), insbesondere Lastkraftwagen oder Bus, mit einem gefederten Fahrzeuggestell (13), auf das sich ein Stromabnehmer (2) nach einem der Ansprüche 1 bis 4 abstützt.
